# EUROPEAN PATENT SPECIFICATION

(11) **EP 1 655 925 B1**
(45) Date of publication and mention of the grant of the patent: **19.06.2013**
(21) Application number: 05270069.7
(22) Date of filing: 14.10.2005
(51) Int. Cl.: H04L 29/06

(54) **Systems, methods and devices for processing audio signals**
Verfahren, Methoden und Vorrichtungen für die Verarbeitung der Audiosignale
Systèmes, méthodes et dispositifs pour traiter les signaux audio

(30) Priority: 03.11.2004 US 980052
(43) Date of publication of application: 10.05.2006
(73) Proprietor: Chanyu Holdings, LLC, Wilmington, DE 19808 (US)
(72) Inventor: Barzegar, Farhad, Branchburg, NJ 08876 (US); Gerszberg, Irwin, Kendall Park, NJ 08824 (US); Mollica, Scott, Joseph, Red Bank, NJ 07701 (US); Hill, Thomas, Wilmer, Succasunna, NJ 07876 (US)
(74) Representative: Kazi, Ilya

(56) References cited:
- EP-A- 1 024 638
- EP-A- 1 326 359
- WO-A-2004/034376
- US-A1- 2001 044 712

## Description

### Background

EP-A-1 024 638 is allegedly directed to a description of a "system and method for dynamic codec alteration". EP-A-1 024 638 allegedly recites that a "bandwidth adjustment server (BWAS) is provided which monitors system bandwidth usage, sends requests to terminals, to identify their coding capabilities, and directs each of the terminals to adjust their coding algorithms based on system bandwidth usage. If system bandwidth usage is high, the BWAS requires the terminals to employ a less bandwidth intensive coding algorithm; similarly, when system bandwidth usage is low, the BWAS will allow the terminals to employ higher bandwidth use coding algorithms. Codec renegotiation may be initiated if there is a disparity between the bandwidth allocated to new connections versus ongoing connections or an increase in data traffic." See Abstract.

EP-A-1 024 638 does not teach a "CPE gateway coupleable to a network and to an audio device, the CPE gateway adapted to negotiate with the audio device regarding a parameter associated with processing an audio signal to be transmitted across the network, the transmitted audio signal corresponding to a negotiated one of a plurality of audio bandwidths, the plurality of audio bandwidths comprising a first audio bandwidth of approximately 3.1 kHz and a second audio bandwidth of at least approximately 6 kHz."

EP-A-1 326 359 is allegedly directed to a description of an "adaptive bit rate vocoder for IP telecommunications". EP-A-1 326 359 allegedly recites an "adaptive multi-rate vocoder is used for the improvement of a telecommunications between two user equipment while at least one of them is an internet protocol based user equipment. The transmission quality will not only be analyzed when a telecommunications is set up but also during its running. According to that analyze and to the transmission quality required, an encoding level will be chosen. The analyze will be based mostly on the measure of the different latency to which will be subject the digital signals of that telecommunications when being transmitted in packets through at least one IP based network." See Abstract.

EP-A-1 326 359 does not teach a "CPE gateway coupleable to a network and to an audio device, the CPE gateway adapted to negotiate with the audio device regarding a parameter associated with processing an audio signal to be transmitted across the network, the transmitted audio signal corresponding to a negotiated one of a plurality of audio bandwidths, the plurality of audio bandwidths comprising a first audio bandwidth of approximately 3.1 kHz and a second audio bandwidth of at least approximately 6 kHz."

EP-A-1 248 431 proposes a framework for achieving dynamic end-to-end QoS negotiations and control co-ordination. The framework identifies six phases in which peers can establish multiparty, multi-stream, multi-media communication, namely Protocol Discovery, Pre-Negotiation, Multi-stream QoS Synchronisation and QoS Correlation, Fast-Negotiation, Re-Negotiation and Resource Reservation Release.

### Brief Description of the Drawings

A wide variety of potential embodiments will be more readily understood through the following detailed description of certain exemplary embodiments, with reference to the accompanying exemplary drawings in which:

**FIG. 1** is a block diagram of an examplary embodiment of a system 1000;

**FIG. 2** is a block diagram of an exemplary embodiment of an information device 2000;

**FIG. 3** is a flowchart of an exemplary embodiment of a method 3000;

**FIG. 4** is a flowchart of an exemplary embodiment of a method 4000; and

**FIG. 5** is a flowchart of an exemplary embodiment of a method 5000.

### Definitions

When the following terms are used herein, the accompanying definitions apply:

**across the network** - through at least one link coupling nodes comprised by a network.

**adapted to** - made suitable or fit for a specific use or situation.

**apparatus** - an appliance or device for a particular purpose

**audio** - of or relating to humanly audible sound.

**audio bandwidth** - a range of frequencies defined by its highest and lowest limits and typically audible to a human with substantially normal hearing function. Each limit is typically measured as a frequency (in cycles per second, or hertz).

**audio device** - an apparatus adapted to convert audible sound to an electrical signal, an audio recording to an electrical signal, an electrical signal to audible sound, and/or an electrical signal to an audio recording, such as an acoustic transducer, microphone, audio player, speaker, telephone, audio recorder, CD player, DVD recorder, etc.

**audio signal** - an electrical, electromagnetic, and/or optical signal representing audible sound.

**bit rate -** a ratio of the number of bits that are transferred between devices in a specified amount of time, typically one second.

**can -** is capable of, in at least some embodiments.

**coder/decoder (codec) -** a set of instructions, implemented in hardware, firmware, and/or software, that converts digital signals to and from analog according to a given audio file format or streaming audio format. In certain embodiments, an audio codec can utilize a variable or constant bit rate, and/or correspond to any appropriate standard, such as G.711, G.722, G.723.1, G729A, MPEG1 Layer II, MPEG1 Layer III, Dolby A, Dolby AC-2, Dolby Fax, Dolby AC-3, Dolby Digital, Dolby Digital 5.1, Dolby Surround Pro-Logic, Dolby Digital EX, THX Surround EX, DTS, DTS-ES, DTS-ES Discrete 6.1, APT-X, 3D2, APT-XE, MPEG-2 AAC, MP3, MP3 Pro, MPEG-4, AAC, DivX, CD Audio, DVD Audio, WAV, WMA, Windows Media Audio, RealAudio, Ogg Vorbis, ATRAC, FLAC, Speex, Shorten, and/or Monkey's Audio Compressor, etc.

**communications connection -** a channel of communications that is not necessary a direct physical link.

**compress -** providing and/or storing data in a format that requires less space than usual.

**comprising -** including but not limited to.

**constant bit rate -** a bit rate that does not vary with time.

**convert -** to translate from a digital form to an analog form.

**coupleable -** capable of being joined, connected, and/or linked together.

**customer premises equipment (CPE) -** telecommunications equipment that resides on the premises of a telecommunications user who is not a provider of telecommunications services.

**data -** distinct pieces of information, usually formatted in a special or predetermined way and/or organized to express concepts.

**decompress -** to restore to uncompressed form; to reverse the effects of data compression.

**digitize -** to translate from an analog form to a digital form. For example, optical scanners digitize images by translating them into bit maps. It is also possible to digitize audio, video, and/or any type of movement. In all these cases, digitization is performed by sampling at discrete intervals. To digitize audio, for example, a device measures a sound wave's amplitude many times per second. These numeric values can then be recorded digitally.

**gateway -** a device connected to a network for performing code and/or protocol conversion processes. An entrance and exit into a network.

**input/output (I/O) device -** the input/output (I/O) device of the information device can be any sensory-oriented input and/or output device, such as an audio, visual, haptic, olfactory, and/or taste-oriented device, including, for example, a monitor, display, projector, overhead display, keyboard, keypad, mouse, trackball, joystick, gamepad, wheel, touchpad, touch panel, pointing device, microphone, speaker, video camera, camera, scanner, printer, haptic device, vibrator, tactile simulator, and/or tactile pad, potentially including a port to which an I/O device can be attached or connected.

**instructions -** directions adapted to perform a particular operation or function.

**may -** is allowed to, in at least some embodiments.

**memory -** a device capable of storing analog or digital information, for example, a non-volatile memory, volatile memory, Random Access Memory, RAM, Read Only Memory, ROM, flash memory, magnetic media, a hard disk, a floppy disk, a magnetic tape, an optical media, an optical disk, a compact disk, a CD, a digital versatile disk, a DVD, and/or a raid array, etc. The memory can be coupled to a processor and can store instructions adapted to be executed by processor according to an embodiment disclosed herein.

**negotiate -** to confer with one or more other devices in order to determine and/or reach an agreement regarding one or more parameters.

**negotiated parameter -** a negotiation-determined variable and/or its value.

**negotiation-determined -** a parameter arrived at via negotiation.

**network -** a communicatively coupled plurality of nodes.

**network interface -** any device, system, or subsystem capable of coupling an information device to a network. For example, a network interface can be a telephone, cellular phone, cellular modem, telephone data modem, fax modem, wireless transceiver, ethernet card, cable modem, digital subscriber line interface, bridge, hub, router, or other similar device.

**node -** a communication device within a network that is coupled to another node within the network via a link. A CPE gateway is not considered a node.

**parameter -** a variable and/or its value. Examples include a rate, measure, length, protocol, format, etc.

**plurality -** the state of being plural and/or more than one.

**predetermined -** established in advance.

**processing -** v. to put through the steps of a predetermined procedure, such as a procedure for sampling, digitizing, formatting, encoding, compressing, encrypting, transmitting, receiving, decrypting, decompressing, decoding, and/or converting, etc.

**processor -** a device and/or set of machine-readable instructions for performing one or more predetermined tasks. A processor can comprise any one or a combination of hardware, firmware, and/or software. A processor can utilize mechanical, pneumatic, hydraulic, electrical, magnetic, optical, informational, chemical, and/or biological principles, signals, and/or inputs to perform the task(s). In certain embodiments, a processor can act upon information by manipulating, analyzing, modifying, converting, transmitting the information for use by an executable procedure and/or an information device, and/or routing the information to an output device. A processor can be a central processing unit, a local controller, a remote controller, parallel controllers, and/or distributed controllers, etc. Unless stated otherwise, the processor can be a general-purpose device, such as a microcontroller and/or a microprocessor, such the Pentium IV series of microprocessor manufactured by the Intel Corporation of Santa Clara, California. In certain embodiments, the processor can be dedicated purpose device, such as an Application Specific Integrated Circuit (ASIC) or a Field Programmable Gate Array (FPGA) that has been designed to implement in its hardware and/or firmware at least a part of an embodiment disclosed herein.

**provide -** to make available; to supply; to prepare.

**publicly switched telephone network (PSTN) -** the interconnected system of telephone switches and lines used for telecommunication services.

**receive -** to take or acquire something provided.

**sample -** to repeatedly measure, such as at discrete time intervals.

**substantially -** to a great extent or degree.

**system -** a collection of mechanisms, devices, data, and/or instructions, the collection designed to perform one or more specific functions.

**telecommunications -** the science and technology of communication at a distance by electronic transmission of impulses.

**telephone -** an instrument that converts voice and other audio signals into a form that can be transmitted to remote locations and that receives and reconverts information from a transmittable form into voice and other audio signals.

**telephony -** the art or process of transmitting speech at a distance.

**transmit -** to send.

**user interface -** any device for rendering information to a user and/or requesting information from the user. A user interface includes at least one of textual, graphical, audio, video, animation, and/or haptic elements. A textual element can be provided, for example, by a printer, monitor, display, projector, etc. A graphical element can be provided, for example, via a monitor, display, projector, and/or visual indication device, such as a light, flag, beacon, etc. An audio element can be provided, for example, via a speaker, microphone, and/or other sound generating and/or receiving device. A video element or animation element can be provided, for example, via a monitor, display, projector, and/or other visual device. A haptic element can be provided, for example, via a very low frequency speaker, vibrator, tactile stimulator, tactile pad, simulator, keyboard, keypad, mouse, trackball, joystick, gamepad, wheel, touchpad, touch panel, pointing device, and/or other haptic device, etc. A user interface can include one or more textual elements such as, for example, one or more letters, number, symbols, etc. A user interface can include one or more graphical elements such as, for example, an image, photograph, drawing, icon, window, title bar, panel, sheet, tab, drawer, matrix, table, form, calendar, outline view, frame, dialog box, static text, text box, list, pick list, pop-up list, pull-down list, menu, tool bar, dock, check box, radio button, hyperlink, browser, button, control, palette, preview panel, color wheel, dial, slider, scroll bar, cursor, status bar, stepper, and/or progress indicator, etc. A textual and/or graphical element can be used for selecting, programming, adjusting, changing, specifying, etc. an appearance, background color, background style, border style, border thickness, foreground color, font, font style, font size, alignment, line spacing, indent, maximum data length, validation, query, cursor type, pointer type, autosizing, position, and/or dimension, etc. A user interface can include one or more audio elements such as, for example, a volume control, pitch control, speed control, voice selector, and/or one or more elements for controlling audio play, speed, pause, fast forward, reverse, etc. A user interface can include one or more video elements such as, for example, elements controlling video play, speed, pause, fast forward, reverse, zoom-in, zoom-out, rotate, and/or tilt, etc. A user interface can include one or more animation elements such as, for example, elements controlling animation play, pause, fast forward, reverse, zoom-in, zoom-out, rotate, tilt, color, intensity, speed, frequency, appearance, etc. A user interface can include one or more haptic elements such as, for example, elements utilizing tactile stimulus, force, pressure, vibration, motion, displacement, temperature, etc.

**variable bit rate -** a bit rate that does vary with time.

### Detailed Description

The sounds produced in human speech contain frequencies that typically lie within the frequency band of approximately 100 Hz to approximately 8,000 Hz. The range of frequencies that can be detected (heard) by the human ear are normally considered to lie within the range of approximately 20 Hz to approximately 20,000 Hz. Yet, in traditional telephony systems, such as Plain Old Telephone Systems (POTS) or systems utilizing G.711, voice input to a telephone microphone is filtered to an approximately 3.1 kHz band, spanning from about 300 Hz to about 3400 Hz, which includes guard bands. Thus, traditional telephony ignores substantial ranges of human-perceptible sound.

The reduction in sound quality over the telephone and/or telephony systems has many potential downsides. For example, in normal telephone conversation, sounds or portions of words spoken can be dropped or lost via the low audio bandwidth (approximately 3.1 kHz) provided by the telephone network. These kinds of disturbances can hinder the enjoyment of the conversation. In many languages, small sound nuances can provide different meanings and reduced sound quality and/or audio bandwidth can reduce the capability of hearing and understanding the speaker. Moreover, when the audio signal is comprised of sounds other than speech, such as music, environmental sounds, etc., the reduction in quality and/or enjoyment caused by relatively low audio bandwidth can be substantial.

In certain novel approaches, an enhanced audio bandwidth can be provided by the sender and/or to the receiver. Prior to the connection of a call, customer premises equipment (CPE), such as a wired, wireless, telephone, IP, and/or ATM network gateway, can negotiate with the network for a rate and/or other parameter associated with digitizing and/or processing sound for end-to-end transmission of the digitized sound via the network and/or for a rate and/or other parameter associated with receiving, converting, and/or processing digitized sound from the network in an end-to-end transmission.

Upon wired and/or wireless coupling of a sound device (such as an acoustic transducer, microphone, audio player, speaker, telephone, audio recorder, CD player, DVD recorder, etc.) to a CPE, the sound device can communicate with the CPE so that a rate and/or other parameter associated with digitizing, transmitting, receiving, and/or processing audio signals can be determined. The communication can take the form of a query by the CPE, a message from the sound device, and/or a negotiation therebetween, etc. The CPE can comprise an integrated gateway and one or more sound devices, such as a telephone. The CPE can be "plug-and-play", so that it can be plugged into the network and be ready for use as an intelligent telephone.

The CPE gateway can utilize an audio codec utilizing a variable or constant bit rate, and/or corresponding to any appropriate standard, such as, for example, G.711, G.722, G.723.1, G729A, MPEG1 Layer II, MPEG1 Layer III, Dolby A, Dolby AC-2, Dolby Fax, Dolby AC-3, Dolby Digital, Dolby Digital 5.1, Dolby Surround Pro-Logic, Dolby Digital EX, THX Surround EX, DTS, DTS-ES, DTS-ES Discrete 6.1, APT-X, 3D2, APT-XE, MPEG-2 AAC, MP3, MP3 Pro, MPEG-4, AAC, DivX, CD Audio, DVD Audio, WAV, WMA, Windows Media Audio, RealAudio, Ogg Vorbis, ATRAC, FLAC, Speex, Shorten, and/or Monkey's Audio Compressor, etc. These codecs can utilize, for example 8, 10, 12, 14, 16, 20, 24, 28, 32, and/or 36-bit sampling, at sampling rates ranging from approximately 8 kHz to approximately 100 kHz, including all values and subranges therebetween, such as approximately 8 kHz, approximately 12 kHz and higher, and/or approximately 14 kHz and higher, such as approximately 32 kHz, 44.1 kHz, 48 kHz, etc.

For audio transmissions that originate as analog audio signals, to assist in reconstructing the original analog audio signal at the receiving end of a transmission, the Nyquist criterion can be used to determine a sampling rate that is at least twice as fast as the highest frequency component in the input signal.

Potentially relevant additional information is presented in pending U.S. Patent Application Serial No. 09/694,210, filed on October 23, 2000.

In certain exemplary and/or novel approaches and/or embodiments, an apparatus is provided that comprises: a CPE gateway coupleable to a network and to an audio device, the CPE gateway adapted to negotiate with the network regarding a parameter associated with processing an audio signal to be transmitted across the network, the transmitted audio signal corresponding to a selected audio bandwidth from a plurality of audio bandwidths, the selected audio bandwidth associated with the parameter, the plurality of audio bandwidths comprising a first audio bandwidth of approximately 3.1 kHz and a second audio bandwidth of at least approximately 6 kHz.

Certain exemplary embodiments provide a method comprising a plurality of activities, comprising: initiating a communications connection between a CPE gateway and a network coupled to the CPE gateway, the CPE gateway coupleable to an audio device; and negotiating between the CPE gateway and the network for a parameter associated with processing an audio signal to be transmitted across the network. In certain exemplary embodiments, the transmitted audio signal can correspond to a selected audio bandwidth from a plurality of audio bandwidths, the selected audio bandwidth associated with the parameter, the plurality of audio bandwidths comprising a first audio bandwidth of approximately 3.1 kHz and a second audio bandwidth of at least approximately 6 kHz.

Certain exemplary embodiments provide an apparatus comprising: an audio device coupleable to a CPE gateway that is coupleable to a network, the audio device adapted to negotiate with the CPE gateway regarding a parameter associated with processing an audio signal to be transmitted across the network. In certain exemplary embodiments, the transmitted audio signal can correspond to a selected audio bandwidth from a plurality of audio bandwidths, the selected audio bandwidth associated with the parameter, the plurality of audio bandwidths comprising a first audio bandwidth of approximately 3.1 kHz and a second audio bandwidth of at least approximately 6 kHz.

Certain exemplary embodiments provide a method comprising a plurality of activities, comprising: initiating a communications connection between an audio device and a CPE gateway coupled to the audio device, the CPE gateway coupleable to a network; and negotiating between the audio device and the CPE gateway for a parameter associated with processing an audio signal to be transmitted across the network. In certain exemplary embodiments, the transmitted audio signal can correspond to a selected audio bandwidth from a plurality of audio bandwidths, the selected audio bandwidth associated with the parameter, the plurality of audio bandwidths comprising a first audio bandwidth of approximately 3.1 kHz and a second audio bandwidth of at least approximately 6 kHz.

Certain exemplary embodiments provide an apparatus comprising: a CPE gateway coupleable to a network and to an audio device, the CPE gateway adapted to negotiate with the audio device regarding a parameter associated with processing an audio signal to be transmitted across the network. In certain exemplary embodiments, the transmitted audio signal can correspond to a negotiated one of a plurality of audio bandwidths, the plurality of audio bandwidths comprising a first audio bandwidth of approximately 3.1 kHz and a second audio bandwidth of at least approximately 6 kHz.

Certain exemplary embodiments provide a method comprising a plurality of activities, comprising: via a CPE gateway: initiating a communications connection between an audio device coupled to the CPE gateway and a network coupled to the CPE gateway; and negotiating on behalf of the audio device with the network for a parameter associated with processing an audio signal to be transmitted across the network. In certain exemplary embodiments, the transmitted audio signal can correspond to a selected audio bandwidth from a plurality of audio bandwidths, the selected audio bandwidth associated with the parameter, the plurality of audio bandwidths comprising a first audio bandwidth of approximately 3.1 kHz and a second audio bandwidth of at least approximately 6 kHz.

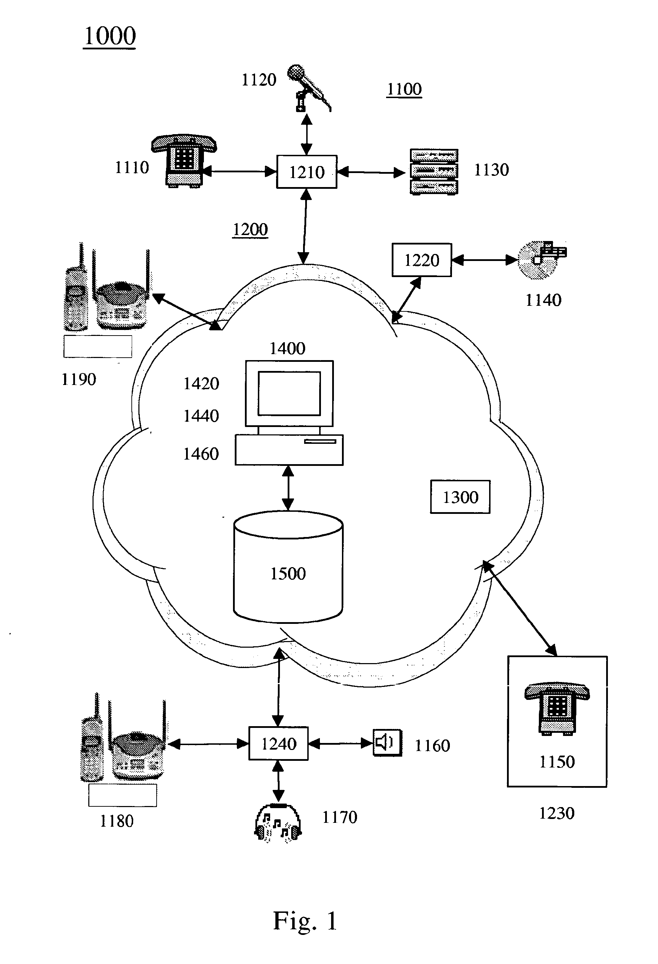

**FIG. 1** is a block diagram of an exemplary embodiment of a system 1000, which can comprise an audio device 1100, such as a corded telephone 1110, microphone 1120, audio gear (instrument, MIDI component, receiver, player, amplifier, equalizer, conditioner, sampler, recorder, etc.) 1130, audio player/recorder 1140 (which can comprise video capabilities as well), integrated telephone 1150, speaker 1160, headphones 1170, and/or cordless telephones 1180, 1190, etc. Any audio device 1100 can comprise an acoustic transducer. An audio device can be capable of generating, transmitting, receiving, processing, and/or playing an audio signal having an audio bandwidth of from approximately 3.1 kHz to approximately 48kHz, including all values and subranges therebetween.

If utilized as a telephone, audio device 1100 can comprise a handset that includes a plurality of speaker elements placed in different locations on the handset. The location of the speaker elements can be chosen so as to be advantageous for purposes of the user's auditory experience. For example, one speaker can be positioned in the traditional "listening" portion of the handset while a second speaker can be positioned on the opposing side of the handset. Alternatively, the speakers can be positioned next to one another but provided with directionality that hits the inside of the user's ear from different angles. The size and nature of each speaker element does not need to be uniform. For example, one of the speaker elements can act as the equivalent of a bass booster or as a sub-woofer. Different speaker elements, provided with enough bandwidth, can be utilized to reproduce the equivalent of 5.1 or 6.1 sound. The speaker elements provided in the handset can be of sufficient quality to enable the transmission of the high-quality and/or high audio bandwidth voice signal.

Audio device 1100, CPE gateway 1200 (as further described below), and/or network 1300 (as further described below) can enable voice and/or audio signals to be coded, transmitted, received, and/or processed at a higher sampling rate with a higher number of bits per sample to, inter alia, increase the potential dynamic range, expand the frequency response, and/or improve the signal-to-noise ratio, etc.

Certain audio devices, such as 1110, 1120, 1130, 1140, 1150, 1160, 1170, and 1180 can be coupled via a CPE gateway 1200, such as CPE gateways 1210, 1220, 1230, 1240, to a telecommunications network 1300. In certain embodiments, a CPE gateway 1230 can be integrated with an audio device 1150.

Network 1300 can be a telecommunications network, a telephone network, and/or a PSTN. Network 1300 can be a broadband network, which can utilize any of a variety of technologies, such as, for example, ISDN, cable, digital subscriber line, T1, wireless, etc. Higher level audio protocols utilized on and/or over network 1300 can include Voice over IP (VoIP), Voice over ATM (VoATM), and/or Voice over Frame Relay (VoFR), etc.

Network 1300 can comprise one or more network nodes 1400, such as a switch, softswitch, router, server, etc., any of which can be coupled to and/or integrate a database 1500. Any network node 1400 can comprise a user interface 1420 adapted to allow a network administrator to manage network node 1400. Any network node 1400 can comprise a server module 1440 adapted to respond to and/or initiate requests for data, files, transmissions, connections, and/or services, such as negotiation services. Any network node 1400 can comprise a negotiation module 1460 adapted to negotiate with nodes within network 1300, and/or systems outside network 1300, regarding transmissions across and/or within network 1300, such as transmissions involving audio signals.

A CPE gateway can comprise instructions and/or the capability for negotiating with an audio device 1100 and/or network 1300 and/or one or more nodes 1400 within network 1300 regarding a parameter associated with processing an audio signal to be transmitted across network 1300, the transmitted audio signal corresponding to a selected audio bandwidth, such as an audio bandwidth that is compatible with a sending audio device, e.g., 1120, a sending CPE gateway, e.g., 1210, network 1300, a receiving CPE gateway 1240, and/or a receiving audio device, e.g., 1170 and/or 1190. For example, the selected audio bandwidth can be compatible with (e.g., no larger than) the available audio bandwidth of the device and/or link in the transmission chain having the smallest available audio bandwidth.

Typically, the negotiations will consider the entire transmission, from sending audio device to receiving audio device, and the capabilities, such as audio bandwidth capabilities, of all transmission participants therebetween, including participating network nodes, outside-the-network transmission components, and/or links and/or connections therebetween, etc. Additional parameters and/or factors can be considered in the negotiations, such as quality of service (QOS), latency, jitter, error rates, error correction, redundancy, costs, priorities, channel availability, etc.

Any CPE gateway can have any needed physical port for coupling to an audio device and/or the network. Examples include jacks, connections, and/or ports for POTS, RCA, RJ-11, RJ-45, serial, SCSI, FireWire, Ethernet, broadband, USB, USB2, 802.11, UWB, WiFi, Bluetooth, etc. Any CPE gateway 1200 can have "plug-and-play" capability so that if an audio device supporting a relatively high bandwidth is plugged into a CPE gateway 1200, the audio device, CPE gateway, and/or network immediately negotiate to transmit an audio signal that takes advantage of as much of that high bandwidth as possible, considering the other transmission participants and/or negotiated parameters and/or factors.

Thus, via any CPE gateway 1200, a customer and/or user can connect a legacy low-quality telephony equipment as well as new high-quality and/or higher bandwidth telephony equipment and/or audio devices to the same high-quality voice network. In certain exemplary embodiments, any negotiation described herein can be dynamic and/or responsive to changes in and/or proposed for a transmission participant (including network 1300) and/or links therebetween.

An audio device 1100 and/or a CPE gateway 1200 can comprise one or more audio codecs. Any audio codec can utilize a constant and/or a variable bit rate. Any CPE gateway 1200 can process, and/or select an audio codec for processing, the audio signal according to the negotiated parameter(s).

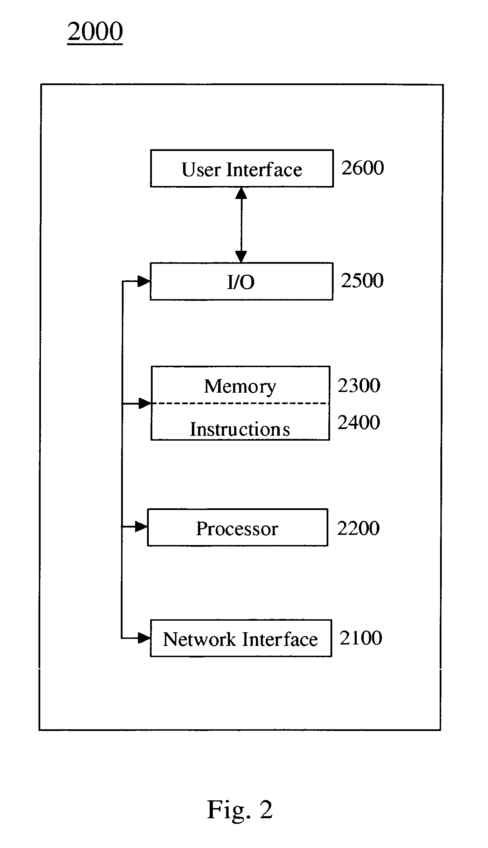

**FIG. 2** is a block diagram of an exemplary embodiment of an information device 2000, which in certain operative embodiments can comprise, for example, any audio device 1100, CPE gateway 1200, and/or network node 1400 of FIG. 1. Information device 2000 can comprise any of numerous well-known components, such as for example, one or more network interfaces 2100, one or more processors 2200, one or more memories 2300 containing instructions 2400, one or more input/output (I/O) devices 2500, and/or one or more user interfaces 2600 coupled to I/O device 2500, etc.

In certain exemplary embodiments, via one or more user interfaces 2600, such as a graphical user interface, a user, such as a network administrator, can view a rendering of information related to negotiating audio bandwidth for an audio signal transmitted across a network.

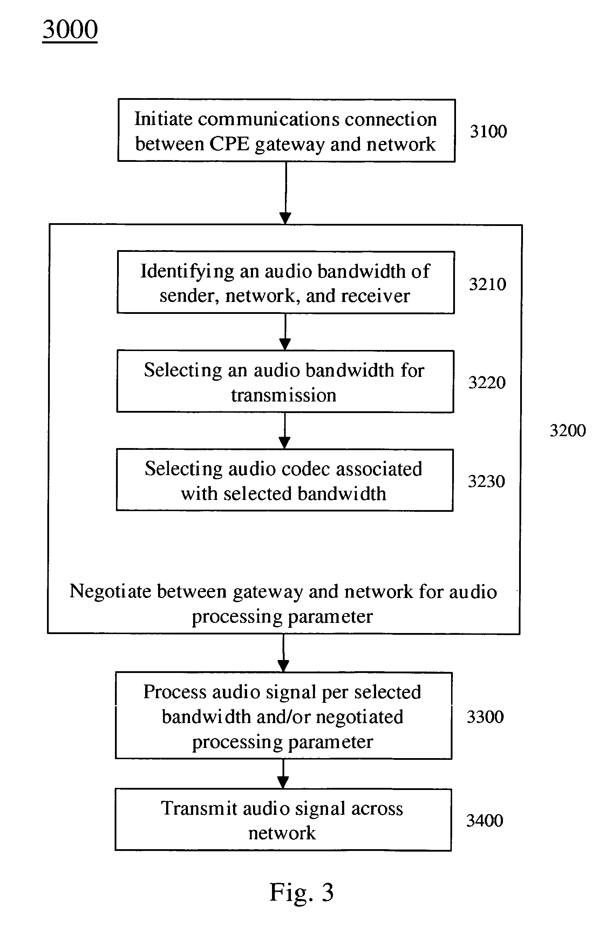

**FIG. 3** is a flowchart of an exemplary embodiment of a method 3000. At activity 3100, communications can be initiated between a CPE gateway and a network. During such initiations, certain capabilities of the CPE gateway and/or network can be identified and/or determined, such as via a subscription mechanism. The CPE gateway and/or network can be associated with authorized users and/or pre-identified capabilities.

At activity 3200, the gateway and the network can negotiate regarding an audio processing parameter and/or a parameter associated with processing an audio signal to be transmitted and/or in transmission across the network. The audio signal can correspond to an audio bandwidth selected from a group of potential audio bandwidths, the group including a bandwidth of approximately 3.1 kHz (which corresponds to the bandwidth of traditional telephony devices and/or CPE's) and a bandwidth of at least approximately 6 kHz. Other potential members of the group can be from approximately 3.1 kHz to approximately 48 kHz, including all values and subranges therebetween, including approximately 7kHz, 10kHz, 12kHz, 15kHz, 20kHz, 40kHz, etc. The negotiated bandwidth can vary with respect to time. By including a bandwidth of approximately 3.1 kHz, the CPE gateway can accommodate a transmission involving a traditional "legacy" CPE audio device, such as a traditional analog telephone. That is, the CPE gateway can help "downshift" the audio signal so that the call becomes like any regular call on the legacy network. Alternatively, the CPE gateway can be responsible for and/or request conversion of the legacy voice signal into a higher-class and/or higher bandwidth signal.

At activity 3210, an audio bandwidth capability of each participant in the transmission (e.g., a sending audio device, sending CPE gateway, nodes of the network, the receiving CPE gateway and/or device, a receiving audio device, and/or links and/or connections therebetween, etc.) can be identified. For example, a CPE gateway can request a particular bandwidth from the network, can ask if that bandwidth is available, and/or can indicate the available bandwidth of the CPE and/or an audio device coupled thereto. As another example, a CPE gateway can identify what kind of quality the coupled audio device can accept, what kind of speaker(s) are available at the audio device, whether the audio device is capable of receiving or transmitting stereo or quadrophonic or 5.1 or 6.1 sound, whether other high-quality or lower-quality parameters have been satisfied, etc. There can be mechanisms provided in the network and/or at the CPE gateway for determining the capabilities of the originating audio device.

At activity 3220, an audio bandwidth can be selected and/or reserved for the transmission, the selection and/or reservation potentially dependent on the identified capabilities of the transmission participants and/or other relevant factors, whether current, expected, and/or predicted, such as device processing load, network load, quality of service (QOS), latency, jitter, error rates, error correction, redundancy, costs, priorities, channel availability, etc. Where appropriate, multiple audio channels can be selected and/or reserved, for example, to allow stereo sound to be transmitted.

At activity 3230, an audio codec appropriate for the selected audio bandwidth, the transmission participants, and/or the other relevant factors and/or parameters can be selected.

At activity 3300, the audio signal can be processed per the selected audio bandwidth and/or another negotiated processing parameter.

At activity 3400, the audio signal can be transmitted across the network. Note that any transmission can be encrypted and/or authenticated.

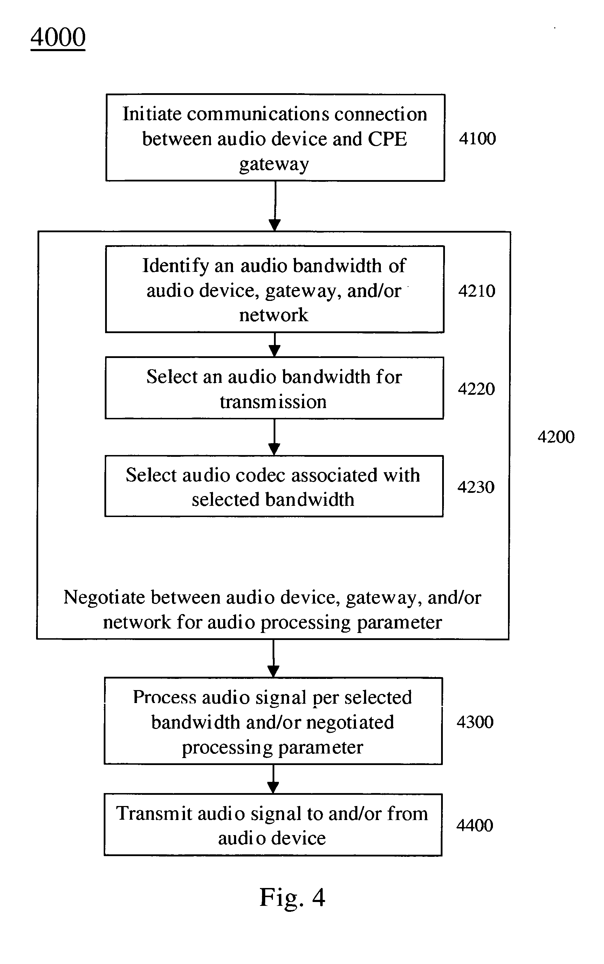

**FIG. 4** is a flowchart of an exemplary embodiment of a method 4000. At activity 4100, communications can be initiated between an audio device and a CPE gateway. During such initiations, certain capabilities of the audio device and/or CPE gateway and/or network can be identified and/or determined, such as via a subscription mechanism. The audio device and/or CPE gateway can be associated with authorized users and/or pre-identified capabilities.

At activity 4200, the audio device and/or gateway can negotiate regarding an audio processing parameter and/or a parameter associated with processing an audio signal to be transmitted and/or in transmission therebetween and/or across the network. The audio signal can correspond to an audio bandwidth selected from a group of potential audio bandwidths, the group including a bandwidth of approximately 3.1 kHz (which corresponds to the bandwidth of traditional telephony devices and/or CPE's) and a bandwidth of at least approximately 6 kHz. Other potential members of the group can be from approximately 3.1 kHz to approximately 48 kHz, including all values and subranges therebetween, including approximately 7kHz, 10kHz, 12kHz, 15kHz, 20kHz, 40kHz, etc. The negotiated bandwidth can vary with respect to time. By including a bandwidth of approximately 3.1 kHz, the CPE gateway can accommodate a transmission involving a traditional "legacy" CPE audio device, such as a traditional analog telephone. That is, the CPE gateway can help "downshift" the audio signal so that the call becomes like any regular call on the legacy network. Alternatively, the CPE gateway can be responsible for and/or request conversion of the legacy voice signal into a higher-class and/or higher bandwidth signal.

At activity 4210, an audio bandwidth capability of each participant in the transmission (e.g., a sending audio device, sending CPE gateway, nodes of the network, the receiving CPE gateway and/or device, a receiving audio device, and/or links and/or connections therebetween, etc.) can be identified. For example, a CPE gateway can request a particular bandwidth from the network, can ask if that bandwidth is available, and/or can indicate the available bandwidth of the CPE and/or an audio device coupled thereto. As another example, a CPE gateway can identify what kind of quality the coupled audio device can accept, what kind of speaker(s) are available at the audio device, whether the audio device is capable of receiving or transmitting stereo or 5.1 or 6.1 sound, whether other high-quality or lower-quality parameters have been satisfied, etc. There can be mechanisms provided in the network and/or at the CPE gateway for determining the capabilities of the originating audio device.

At activity 4220, an audio bandwidth can be selected and/or reserved for the transmission, the selection and/or reservation potentially dependent on the identified capabilities of the transmission participants and/or other relevant factors, whether current, expected, and/or predicted, such as device processing load, network load, quality of service (QOS), latency, jitter, error rates, error correction, redundancy, costs, priorities, channel availability, etc. Where appropriate, multiple audio channels can be selected and/or reserved, for example, to allow stereo sound to be transmitted.

At activity 4230, an audio codec appropriate for the selected audio bandwidth, the transmission participants, and/or the other relevant factors and/or parameters can be selected.

At activity 4300, the audio signal can be processed per the selected audio bandwidth and/or another negotiated processing parameter.

At activity 4400, the audio signal can be transmitted to and/or from the audio device and/or across the network. Note that any transmission can be encrypted and/or authenticated.

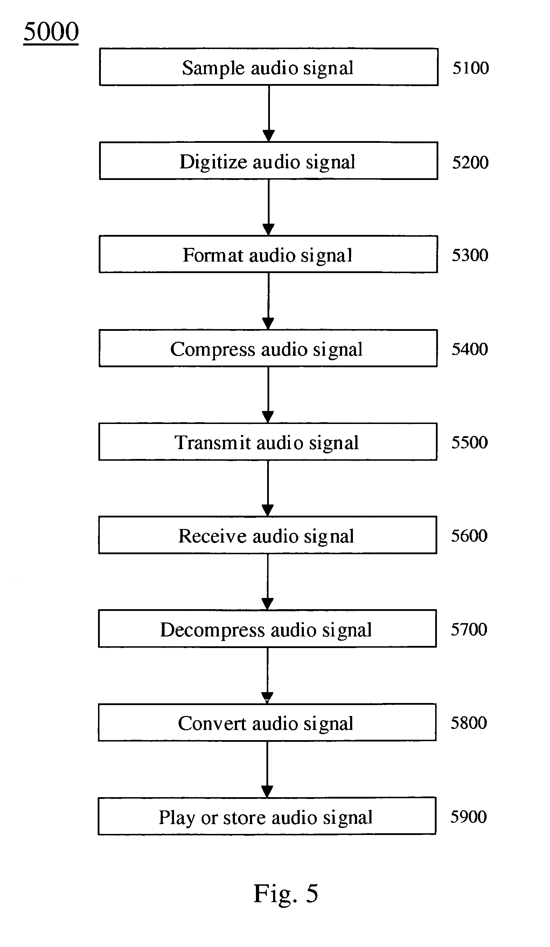

**FIG. 5** is a flowchart of an exemplary embodiment of a method 5000, which can be used for processing an audio signal, such as according to a negotiated parameter. Upon generation of an analog audio signal, at activity 5100, the audio signal can be sampled. At activity 5200, the audio signal can be digitized. At activity 5300, the audio signal can be formatted and/or packetized. At activity 5400, the audio signal can be compressed and/or packetized. At activity 5500, the audio signal can be transmitted, such as to and/or from the audio device, the CPE gateway, and/or across the network. At activity 5600, the audio signal can be received. At activity 5700, the audio signal can be decompressed. At activity 5800, the audio signal can be converted, such as to an analog format. At activity 5900, the audio signal can be played and/or stored. Note that any of activities 5100-5900 can occur by and/or at, for example, an audio device and/or a CPE gateway.

Still other embodiments will become readily apparent to those skilled in this art from reading the above-recited detailed description and drawings of certain exemplary embodiments. It should be understood that numerous variations, modifications, and additional embodiments are possible, and accordingly, the scope of this application is defined by the appended claims and not by the embodiments described above. For example, regardless of the content of any portion (e.g., title, field, background, summary, abstract, drawing figure, etc.) of this application, unless clearly specified to the contrary, there is no requirement for the inclusion in any claim herein or of any application claiming priority hereto of any particular described or illustrated activity or element, any particular sequence of such activities, or any particular interrelationship of such elements. Moreover, any activity can be repeated, any activity can be performed by multiple entities, and/or any element can be duplicated. Further, any activity or element can be excluded, the sequence of activities can vary, and/or the interrelationship of elements can vary. Accordingly, the descriptions and drawings are to be regarded as illustrative in nature, and not as restrictive. Moreover, when any number or range is described herein, unless clearly stated otherwise, that number or range is approximate. When any range is described herein, unless clearly stated otherwise, that range includes all values therein and all subranges therein.

## Claims

1. An apparatus comprising:
a customer premises equipment gateway (1200,1210,1240) coupleable to a first audio device (1100,1110,1120) and a network (1300) having at least one node (1400) and communicably linking the first audio device (1100,1110) to a second audio device (1150,1180) through the at least one node (1400);
wherein the customer premises equipment gateway (1200) is adapted to negotiate with each node (1400) of the network (1300), the first audio device (1100,1110,1120), and the second audio device (1150,1180,1190) to select a transmission audio bandwidth that is no larger than an available audio bandwidth of the first audio device (1100,1110), the second audio device (1150,1180,1190) and each node (1400) of network (1300) between the first audio device (1100,1110) and the second audio device (1150,1180,1190);
wherein the customer premises equipment gateway (1200,1210,1240) is further adapted to process an audio signal to be transmitted across the network (1300) from the first audio device (1100,1110,1120) to the second audio device (1150,1180,1190) according to a selected transmission audio bandwidth; and
wherein at least one of the first audio device (1100,1110,1120) and the second audio device (1150,1180,1190) comprise a telephone handset.

2. The apparatus of claim 1, further comprising an audio codec, the customer premises equipment gateway adapted to identify the audio bandwidth capability of each of the audio device, the network node via which the audio signal is transmitted, and the network link between the customer premises equipment gateway and the network node.

3. The apparatus of claim 1, further comprising an audio codec adapted to utilize a constant bit rate, the customer premises equipment gateway adapted to identify an audio quality that the audio device can accept.

4. The apparatus of claim 1, further comprising an audio codec adapted to utilize a variable bit rate, the customer premises equipment gateway adapted to request conversion of a legacy voice signal into a higher bandwidth signal responsive to a determination that equipment associated with the audio signal is capable of utilizing the higher bandwidth signal.

5. The apparatus of claim 1, wherein the apparatus is adapted to select an audio codec for processing the audio signal according to the negotiated parameter.

6. The apparatus of claim 1, wherein the first audio device (1110) comprises a telephone.

7. The apparatus of claim 1, wherein the first audio device (1120) comprises a microphone.

8. The apparatus of claim 1, wherein the first audio device (1100) comprises a speaker (1160).

9. The apparatus of claim 1, wherein the first audio device (1100) comprises an acoustic transducer.

10. The apparatus of claim 1, wherein the first audio device (1100) comprises an audio player.

11. The apparatus of claim 1, wherein the first audio device (1100) comprises an audio recorder.

12. The apparatus of claim 1, wherein the network (1300) comprises a packet network.

13. The apparatus of claim 1, wherein the network (1300) comprises a publicly switched telephone network.

14. The apparatus of claim 1, wherein the apparatus comprises the first audio device (1100), the audio device adapted to provide plug and play information to the customer premises equipment gateway, the customer premises equipment gateway adapted to negotiate to transmit the audio signal taking advantage of as much bandwidth as possible considering the plug and play information and other factors.

15. A method of negotiating audio bandwidth across a network, comprising:
initiating, with a customer premises equipment gateway (1210), a communications connection between a first audio device (1100,1110) coupled to the customer premises equipment gateway and a second audio device (1150,1180,1190) over a network (1300) coupled to the customer premises equipment gateway (1210), wherein the network (1300) has at least one node (1400) between the customer premises equipment gateway (1210) and the second audio device (1150,1180,1190);
negotiating with each node (1400) of the network (1300), the first audio device (1100), and the second audio device (1150) to identify a transmission audio bandwidth that is no larger than an available audio bandwidth of the first audio device (1100), the second audio device (1150,1180,1190), and each node (1400) of network (1300);
selecting an identified transmission audio bandwidth for an audio signal to be transmitted from the first audio device (1100) to the second audio device (1150,1180,1190) over the network (1300); and
wherein at least one of the first audio device (1100,1110) and the second audio device (1150,1180,1190) comprise a telephone.

16. The method of claim 15, further comprising selecting an audio codec for processing the audio signal according to the negotiated parameter.

17. The method of claim 15, further comprising sampling the audio signal according to the parameter.

18. The method of claim 15, further comprising digitizing the audio signal according to the parameter.

19. The method of claim 15, further comprising formatting the audio signal according to the parameter.

20. The method of claim 15, further comprising compressing the audio signal according to the parameter.

21. The method of claim 15, further comprising providing digitized the audio signal to the network (1300) according to the parameter.

22. The method of claim 15, further comprising receiving digitized the audio signal from the network (1300) according to the parameter.

23. The method of claim 15, further comprising decompressing the audio signal according to the parameter.

24. The method of claim 15, further comprising converting the audio signal according to the parameter.

25. A machine readable medium storing instruction for negotiating audio bandwidth across a network, comprising:
Initiating, with a customer premises equipment gateway, a communications connection between a first audio device (1100,1110,1120) coupled to the customer premises equipment gateway and a second audio device (1150,1180,1190) over a network (1300) coupled to the customer premises equipment gateway, wherein the network (1300) has at least one node (1400) between the customer premises equipment gateway and the second audio device (1150,1180,1190);
negotiating with each node (1400) of the network (1300), the first audio device (1100,1110) and the second audio device (1150,1180,1190) to identify a transmission audio bandwidth that is no larger than an available audio bandwidth of the first audio device (1100,1110,1120), the second audio device (1150,1180,1190) and each node (1400) of network (1300);
selecting an identified transmission audio bandwidth for an audio signal to be transmitted from the first audio device (1100,1110) to the second audio device (1150,1180,1190) over the network (1300); and
wherein at least one of the first audio device (1100,1110,1120) and the second audio device (1150,1180,1190) comprise a telephone.

## Patentansprüche

1. Vorrichtung, die Folgendes umfasst:
ein Gateway (1200, 1210, 1240) für beim Kunden installierte Geräte, das mit einem ersten Audiogerät (1100, 1110, 1120) und einem Netz (1300) mit wenigstens einem Knoten (1400) gekoppelt werden kann und das erste Audiogerät (1100, 1110) mit einem zweiten Audiogerät (1150, 1180) durch den wenigstens einen Knoten (1400) kommunikativ verbindet;
wobei das Gateway (1200) für beim Kunden installierte Geräte so ausgelegt ist, dass es mit jedem Knoten (1400) des Netzes (1300), dem ersten Audiogerät (1100, 1110, 1120) und dem zweiten Audiogerät (1150, 1180, 1190) negoziiert, um eine Übertragungsaudiobandbreite zu wählen, die nicht größer ist als eine verfügbare Audiobandbreite des ersten Audiogeräts (1100, 1110), des zweiten Audiogeräts (1150, 1180, 1190) und jedes Knotens (1400) des Netzes (1300) zwischen dem ersten Audiogerät (1100, 1110) und dem zweiten Audiogerät (1150, 1180, 1190);
wobei das Gateway (1200, 1210, 1240) für beim Kunden installierte Geräte ferner so ausgelegt ist, dass es ein vom ersten Audiogerät (1100, 1110, 1120) über das Netz (1300) zum zweiten Audiogerät (1150, 1180, 1190) zu übertragendes Audiosignal gemäß einer gewählten Übertragungsaudiobandbreite verarbeitet; und
wobei das erste Audiogerät (1100, 1110, 1120) und/oder das zweite Audiogerät (1150, 1180, 1190) ein Telefon umfasst.

2. Vorrichtung nach Anspruch 1, die ferner einen Audio-Codec umfasst, wobei das Gateway für beim Kunden installierte Geräte so ausgelegt ist, dass es die Audiobandbreitenfähigkeit jedes Audiogeräts, des Netzknotens, über den das Audiosignal übertragen wird, und der Netzverbindung zwischen dem Gateway für beim Kunden installierte Geräte und dem Netzknoten identifiziert.

3. Vorrichtung nach Anspruch 1, die ferner einen Audio-Codec umfasst, der so ausgelegt ist, dass er eine konstante Bitrate benutzt, wobei das Gateway für beim Kunden installierte Geräte zum Identifizieren einer Audioqualität ausgelegt ist, die das Audiogerät akzeptieren kann.

4. Vorrichtung nach Anspruch 1, die ferner einen Audio-Codec umfasst, der zum Nutzen einer variablen Bitrate ausgelegt ist, wobei das Gateway für beim Kunden installierte Geräte so ausgelegt ist, dass es die Konvertierung eines Legacy-Sprachsignals in ein Signal höherer Bandbreite als Reaktion auf eine Ermittlung anfordert, dass mit dem Audiosignal assoziiertes Gerät das Signal höherer Bandbreite nutzen kann.

5. Vorrichtung nach Anspruch 1, wobei die Vorrichtung so ausgelegt ist, dass sie einen Audio-Codec zum Verarbeiten des Audiosignals gemäß dem negoziierten Parameter wählt.

6. Vorrichtung nach Anspruch 1, wobei das erste Audiogerät (1110) ein Telefon umfasst.

7. Vorrichtung nach Anspruch 1, wobei das erste Audiogerät (1120) ein Mikrofon umfasst.

8. Vorrichtung nach Anspruch 1, wobei das erste Audiogerät (1100) einen Lautsprecher (1160) umfasst.

9. Vorrichtung nach Anspruch 1, wobei das erste Audiogerät (1100) einen akustischen Wandler umfasst.

10. Vorrichtung nach Anspruch 1, wobei das erste Audiogerät (1100) einen Audio-Player umfasst.

11. Vorrichtung nach Anspruch 1, wobei das erste Audiogerät (1100) einen Audio-Recorder umfasst.

12. Vorrichtung nach Anspruch 1, wobei das Netz (1300) ein Paketnetz umfasst.

13. Vorrichtung nach Anspruch 1, wobei das Netz (1300) ein öffentliches Telefonnetz umfasst.

14. Vorrichtung nach Anspruch 1, wobei die Vorrichtung das erste Audiogerät (1100) umfasst, wobei das Audiogerät so ausgelegt ist, dass es Plug-and-Play-Informationen zum Gateway für beim Kunden installierte Geräte sendet, wobei das Gateway für beim Kunden installierte Geräte so ausgelegt ist, dass es die Übertragung des Audiosignals unter Ausnutzung von möglichst viel Bandbreite unter Berücksichtigung der Plug-and-Play-Informationen und anderer Faktoren negoziiert.

15. Verfahren zum Negoziieren von Audiobandbreite über ein Netz, das Folgendes beinhaltet:
Einleiten, mit einem Gateway (1210) für beim Kunden installierte Geräte, einer Kommunikationsverbindung zwischen einem ersten Audiogerät (1100, 1110), das mit dem Gateway für beim Kunden installierte Geräte gekoppelt ist, und einem zweiten Audiogerät (1150, 1180, 1190), über ein Netz (1300), das mit dem Gateway (1210) für beim Kunden installierte Geräte gekoppelt ist, wobei das Netz (1300) wenigstens einen Knoten (1400) zwischen dem Gateway (1210) für beim Kunden installierte Geräte und dem zweiten Audiogerät (1150, 1180, 1190) hat;
Negoziieren, mit jedem Knoten (1400) des Netzes (1300), des ersten Audiogeräts (1100) und des zweiten Audiogeräts (1150) zum Identifizieren einer Übertragungsaudiobandbreite, die nicht größer ist als eine verfügbare Audiobandbreite des ersten Audiogeräts (1100), des zweiten Audiogeräts (1150, 1180, 1190) und jedes Knotens (1400) des Netzes (1300);
Wählen einer identifizierten Übertragungsaudiobandbreite für ein vom ersten Audiogerät (1100) über das Netz (1300) zum zweiten Audiogerät (1150, 1180, 1190) zu übertragendes Audiosignal; und
wobei das erste Audiogerät (1100, 1110) und/oder das zweite Audiogerät (1150, 1180, 1190) ein Telefon umfasst.

16. Verfahren nach Anspruch 15, das ferner das Wählen eines Audio-Codec zum Verarbeiten des Audiosignals gemäß dem negoziierten Parameter beinhaltet.

17. Verfahren nach Anspruch 15, das ferner das Abtasten des Audiosignals gemäß dem Parameter beinhaltet.

18. Verfahren nach Anspruch 15, das ferner das Digitalisieren des Audiosignals gemäß dem Parameter beinhaltet.

19. Verfahren nach Anspruch 15, das ferner das Formatieren des Audiosignals gemäß dem Parameter beinhaltet.

20. Verfahren nach Anspruch 15, das ferner das Komprimieren des Audiosignals gemäß dem Parameter beinhaltet.

21. Verfahren nach Anspruch 15, das ferner das digitalisierte Bereitstellen des Audiosignals dem Netz (1300) gemäß dem Parameter beinhaltet.

22. Verfahren nach Anspruch 15, das ferner das digitalisierte Empfangen des Audiosignals vom Netz (1300) gemäß dem Parameter beinhaltet.

23. Verfahren nach Anspruch 15, das ferner das Dekomprimieren des Audiosignals gemäß dem Parameter beinhaltet.

24. Verfahren nach Anspruch 15, das ferner das Konvertieren des Audiosignals gemäß dem Parameter beinhaltet.

25. Rechnerlesbares Medium, auf dem Befehle zum Negoziieren von Audiobandbreite über ein Netz gespeichert sind, das Folgendes umfasst:
Einleiten, mit einem Gateway für beim Kunden installierte Geräte, einer Kommunikationsverbindung zwischen einem ersten Audiogerät (1100, 1110, 1120), das mit dem Gateway für beim Kunden installierte Geräte gekoppelt ist, und einem zweiten Audiogerät (1150, 1180, 1190), über ein Netz (1300), das mit dem Gateway für beim Kunden installierte Geräte gekoppelt ist, wobei das Netz (1300) wenigstens einen Knoten (1400) zwischen dem Gateway für beim Kunden installierte Geräte und dem zweiten Audiogerät (1150, 1180, 1190) hat;
Negoziieren, mit jedem Knoten (1400) des Netzes (1300), des ersten Audiogeräts (1100, 1110) und des zweiten Audiogeräts (1150, 1180, 1190) zum Identifizieren einer Übertragungsaudiobandbreite, die nicht größer ist als eine verfügbare Audiobandbreite des ersten Audiogeräts (1100, 1110, 1120), des zweiten Audiogeräts (1150, 1180, 1190) und jedes Knotens (1400) des Netzes (1300);
Wählen einer identifizierten Übertragungsaudiobandbreite für ein vom ersten Audiogerät (1100, 1110) über das Netz (1300) zum zweiten Audiogerät (1150, 1180, 1190) zu übertragendes Audiosignal; und
wobei das erste Audiogerät (1100, 1110, 1120) und/oder das zweite Audiogerät (1150, 1180, 1190) ein Telefon umfasst.

## Revendications

1. Appareil comprenant :
une passerelle pour équipement d'abonné (CPE) (1200, 1210, 1240) capable d'être couplée à un premier dispositif audio (1100, 1110, 1120) et à un réseau (1300) comportant au moins un noeud (1400) et reliant de façon communicable le premier dispositif audio (1100, 1110) à un deuxième dispositif audio (1150, 1180) par l'intermédiaire dudit au moins un noeud (1400) ;
dans lequel la passerelle pour équipement d'abonné (1200) est conçue pour négocier avec chaque noeud (1400) du réseau (1300), le premier dispositif audio (1100, 1110, 1120), et le deuxième dispositif audio (1150, 1180, 1190) pour sélectionner une largeur de bande audio de transmission qui n'est pas plus étendue qu'une largeur de bande audio disponible du premier dispositif audio (1100, 1110), du deuxième dispositif audio (1150, 1180, 1190) et de chaque noeud (1400) du réseau (1300) entre le premier dispositif audio (1100, 1110) et le deuxième dispositif audio (1150, 1180, 1190) ;
dans lequel la passerelle pour équipement d'abonné (1200, 1210, 1240) est en outre conçue pour traiter un signal audio à transmettre à travers le réseau (1300) du premier dispositif audio (1100, 1110, 1120) au deuxième dispositif audio (1150, 1180, 1190) selon une largeur de bande audio de transmission sélectionnée ; et
dans lequel au moins l'un du premier dispositif audio (1100, 1110, 1120) et du deuxième dispositif audio (1150, 1180, 1190) comprend un combiné téléphonique.

2. Appareil selon la revendication 1, comprenant en outre un codec audio, la passerelle pour équipement d'abonné étant conçue pour identifier la capacité de largeur de bande audio de chacun des dispositifs audio, du noeud de réseau par l'intermédiaire duquel le signal audio est transmis, et de la liaison de réseau entre la passerelle pour équipement d'abonné et le noeud de réseau.

3. Appareil selon la revendication 1, comprenant en outre un codec audio conçu pour utiliser un débit binaire constant, la passerelle pour équipement d'abonné étant conçue pour identifier une qualité audio que le dispositif audio peut accepter.

4. Appareil selon la revendication 1, comprenant en outre un codec audio conçu pour utiliser un débit binaire variable, la passerelle pour équipement d'abonné étant conçue pour demander la conversion d'un signal vocal hérité en un signal à largeur de bande supérieure en réponse à une détermination que l'équipement associé au signal audio est capable d'utiliser la largeur de bande supérieure.

5. Appareil selon la revendication 1, l'appareil étant conçu pour sélectionner un codec audio pour le traitement du signal audio selon le paramètre négocié.

6. Appareil selon la revendication 1, dans lequel le premier dispositif audio (1110) comprend un téléphone.

7. Appareil selon la revendication 1, dans lequel le premier dispositif audio (1120) comprend un microphone.

8. Appareil selon la revendication 1, dans lequel le premier dispositif audio (1100) comprend un haut-parleur (1160).

9. Appareil selon la revendication 1, dans lequel le premier dispositif audio (1100) comprend un transducteur acoustique.

10. Appareil selon la revendication 1, dans lequel le premier dispositif audio (1100) comprend un lecteur audio.

11. Appareil selon la revendication 1, dans lequel le premier dispositif audio (1100) comprend un enregistreur audio.

12. Appareil selon la revendication 1, dans lequel le réseau (1300) comprend un réseau de paquets.

13. Appareil selon la revendication 1, dans lequel le réseau (1300) comprend un réseau public téléphonique commuté.

14. Appareil selon la revendication 1, l'appareil comprenant le premier dispositif audio (1100), le dispositif audio étant conçu pour fournir des informations plug and play à la passerelle pour équipement d'abonné, la passerelle pour équipement d'abonné étant conçue pour négocier pour transmettre le signal audio en tirant parti d'une largeur de bande aussi étendue que possible en tenant compte des informations plug and play et d'autres facteurs.

15. Procédé de négociation d'une largeur de bande audio à travers un réseau, consistant à :
amorcer, avec une passerelle pour équipement d'abonné (1210), une liaison de communications entre un premier dispositif audio (1100, 1110) couplé à la passerelle pour équipement d'abonné et un deuxième dispositif audio (1150, 1180, 1190) sur un réseau (1300) couplé à la passerelle pour équipement d'abonné (1210), le réseau (1300) comportant au moins un noeud (1400) entre la passerelle pour équipement d'abonné (1210) et le deuxième dispositif audio (1150, 1180, 1190) ;
négocier avec chaque noeud (1400) du réseau (1300), le premier dispositif audio (1100), et le deuxième dispositif audio (1150) pour identifier une largeur de bande audio de transmission qui n'est pas plus étendue qu'une largeur de bande audio disponible du premier dispositif audio (1100), du deuxième dispositif audio (1150, 1180, 1190) et de chaque noeud (1400) du réseau (1300) ;
sélectionner une largeur de bande audio de transmission identifiée pour un signal audio à transmettre du premier dispositif audio (1100) au deuxième dispositif audio (1150, 1180, 1190) sur le réseau (1300) ; et
dans lequel au moins l'un du premier dispositif audio (1100, 1110) et du deuxième dispositif audio (1150, 1180, 1190) comprend un téléphone.

16. Procédé selon la revendication 15, consistant en outre à sélectionner un codec audio pour le traitement du signal audio selon le paramètre négocié.

17. Procédé selon la revendication 15, consistant en outre à échantillonner le signal audio selon le paramètre.

18. Procédé selon la revendication 15, consistant en outre à numériser le signal audio selon le paramètre.

19. Procédé selon la revendication 15, consistant en outre à formater le signal audio selon le paramètre.

20. Procédé selon la revendication 15, consistant en outre à compresser le signal audio selon le paramètre.

21. Procédé selon la revendication 15, consistant en outre à fournir le signal audio numérisé au réseau (1300) selon le paramètre.

22. Procédé selon la revendication 15, consistant en outre à recevoir le signal audio numérisé à partir du réseau (1300) selon le paramètre.

23. Procédé selon la revendication 15, consistant en outre à décompresser le signal audio selon le paramètre.

24. Procédé selon la revendication 15, consistant en outre à convertir le signal audio selon le paramètre.

25. Support lisible par une machine dans lequel sont mémorisées des instructions pour la négociation d'une largeur de bande audio à travers un réseau, consistant à :
amorcer, avec une passerelle pour équipement d'abonné, une liaison de communications entre un premier dispositif audio (1100, 1110, 1120) couplé à la passerelle pour équipement d'abonné et un deuxième dispositif audio (1150, 1180, 1190) sur un réseau (1300) couplé à la passerelle pour équipement d'abonné, le réseau (1300) comportant au moins un noeud (1400) entre la passerelle pour équipement d'abonné et le deuxième dispositif audio (1150, 1180, 1190) ;
négocier avec chaque noeud (1400) du réseau (1300), le premier dispositif audio (1100, 1110), et le deuxième dispositif audio (1150, 1180, 1190) pour identifier une largeur de bande audio de transmission qui n'est pas plus étendue qu'une largeur de bande audio disponible du premier dispositif audio (1100, 1110, 1120), du deuxième dispositif audio (1150, 1180, 1190) et de chaque noeud (1400) du réseau (1300) ;
sélectionner une largeur de bande audio de transmission identifiée pour un signal audio à transmettre du premier dispositif audio (1100, 1110) au deuxième dispositif audio (1150, 1180, 1190) sur le réseau (1300) ; et
dans lequel au moins l'un du premier dispositif audio (1100, 1110, 1120) et du deuxième dispositif audio (1150, 1180, 1190) comprend un téléphone.
